Europäisches Patentamt

European Patent Office

Office européen des brevets

(19)

(11) Numéro de publication: **0 209 446 B1**

(12) **FASCICULE DE BREVET EUROPEEN**

(45) Date de publication de fascicule du brevet:
13.03.91

(51) Int. Cl.⁵: **G06F 7/544**

(21) Numéro de dépôt: 86401493.1

(22) Date de dépôt: 04.07.86

(54) Multiplieur pour la multiplication de deux nombres complexes.

(30) Priorité: 16.07.85 FR 8510875

(43) Date de publication de la demande:
21.01.87 Bulletin 87/04

(45) Mention de la délivrance du brevet:
13.03.91 Bulletin 91/11

(84) Etats contractants désignés:
DE GB IT

(56) Documents cités:

ELECTRONIC ENGINEERING, vol. 42, no. 506,
avril 1970, pages 71-73, Londres, GB; D.P.
BURTON et al.: "A multiplier for complex
binary numbers"

PROCEEDINGS OF THE IEE, vol. 127, no. 2,
avril 1980, pages 91-106, Stevenage, GB; S.S.
MAGAR et al.: "Microprogrammable arithmetic element and its applications to digital
signal processing"

(73) Titulaire: THOMSON-CSF
51, Esplanade du Général de Gaulle
F-92800 Puteaux(FR)

(72) Inventeur: Cognault, Marc
THOMSON-CSF SCPI 19, avenue de Messine
F-75008 Paris(FR)
Inventeur: Lenormand, Eric
THOMSON-CSF SCPI 19, avenue de Messine
F-75008 Paris(FR)
Inventeur: Albarello, Alain
THOMSON-CSF SCPI 19, avenue de Messine
F-75008 Paris(FR)

(74) Mandataire: Lincot, Georges et al
THOMSON-CSF SCPI
F-92045 PARIS LA DEFENSE CEDEX 67(FR)

## Description

La présente invention a pour objet un multiplieur pour la multiplication de deux nombres complexes. Elle s'applique plus particulièrement à la réalisation de multiplieurs de nombres complexes dont les parties réelle et imaginaire sont exprimées sur des longueurs de 8 bits.

Dans certains domaines du traitement numérique du signal, en particulier pour traiter la phase d'un signal, les opérations de calcul sont effectuées sur des nombres complexes. En employant une architecture numérique standard prévue pour le traitement de nombres réels, la multiplication de nombres complexes demande quatre multiplications et deux additions ou soustractions de nombres réels auxquelles s'ajoutent quelques instructions d'aiguillage.

Certaines architectures, telle que celle décrite dans l'article Electronic Engineering vol. 42 n° 506 avril 1970, pages 71-73, Londres, GB ; D.P. BURTON et al intitulé "A multiplier for complex binary numbers", apportent une amélioration sur ce point en automatisant le séquencement des multiplications et des additions de manière à ramener le coût en temps de la multiplication complexe à celui de quatre multiplications réelles.

Le but de l'invention est de permettre la modification d'un type particulier de multiplieur de nombres réels signés exprimés sur 16 bits pour le rendre apte à exécuter en un temps égal à celui qui est nécessaire pour deux multiplications réelles une multiplication de deux nombres complexes dont les parties réelles et imaginaires sont exprimées sur 8 bits.

A cet effet, l'invention a pour objet un multiplieur pour la multiplication de deux nombres complexes $X = X' + JX''$ et $Y = Y' + JY''$, X', X'', Y', Y'' ayant chacun $\frac{N}{2}$ bits (N nombre entier pair), du type comprenant une première suite et une deuxième suite de K sousmultiplieurs reliés en cascade, chaque suite comprenant des première et deuxième entrées d'opérande, une troisième entrée et une sortie, des nombres X1 et X2 de $\frac{N}{2}$ bits étant appliqués respectivement sur les premières entrées d'opérande de la première et de la deuxième suites et des nombres Y1 et Y2 de $\frac{N}{2}$ bits étant appliques sur les deuxièmes entrées d'opérande des première et deuxième suites et chaque suite étant agencée de manière à fournir sur sa sortie le produit des nombres binaires appliqués sur ses première et deuxième entrées d'opérande augmenté d'une quantité binaire égale au nombre binaire appliqué sur sa troisième entrée, le résultat fourni à la sortie de la première suite étant appliqué à la troisième entrée de la deuxième suite caractérisé en ce que le multiplieur comprend des moyens d'aiguillage pour effectuer au cours respectivement d'un premier cycle et d'un deuxième cycle le calcul de la partie réelle et de la partie imaginaire du produit des deux nombres complexes X et Y, pendant le premier cycle les nombres X1, X2, Y1, Y2 ayant respectivement les valeurs

$$X'.2^{\frac{N}{2}}, \pm X'', \quad Y', \quad Y''.2^{\frac{N}{2}}$$

et pendant le deuxième cycle les nombres XI, X2, Y1, Y2 ayant respectivement les valeurs

$$X''.2^{\frac{N}{2}}, \pm X', \quad Y',$$

$$Y''.2^{\frac{N}{2}}.$$

L'invention a principalement pour avantage qu'elle permet de faire travailler une machine de traitement du signal qui fonctionne habituellement sur des mots complexes de N bits, sur un mode nouveau doublant la capacité des calculs avec des mots complexes de $\frac{N}{2}$ bits.

D'autres caractéristiques et avantages de l'invention apparaîtront au cours de la description qui suit faite aux regards des dessins annexés dans lesquels :

- la figure 1 représente un multiplieur de l'art connu capable d'effeotuer des opérations sur des nombres réels de N bits,
- la figure 2A représente un multiplieur de l'art connu de deux nombres complexes de N bits,
- la figure 2B illustre le fonctionnement du multiplieur de la figure 2A

EP 0 209 446 B1

- la figure 3 montre un circuit qu'il faut adjoindre au multiplieur de l'art connu de la figure 2A pour obtenir le résultat complet de la multiplication de deux nombres complexes,

- la figure 4 est un schéma synoptique du multiplieur selon l'invention,

- la figure 5 est un schéma de principe illustrant un mode de fonctionnement d'un multiplieur de nombres réels à 16 bits,

- la figure 6 est un schéma de principe montrant la modification qu'il faut apporter aux multiplieurs de la figure 5 pour obtenir un multiplieur de nombres complexes codé sur 16 bits,

- la figure 7A est une représentation d'un sous-multiplieur pour la réalisation du multiplieur 16 bits selon l'invention,

- la figure 7B représente la table de décodage d'un décodeur de sous-multiplieur du type représenté à la figure 7A.

- la figure 8 est une représentation symbolique du multiplieur de la figure 7A,

- les figures 9A et 9C illustrent deux représentations symboliques de deux sous-multiplieurs différents de la figure 8,

- la figure 9B représente la table de décodage du décodeur constituant le sous-multiplieur de la figure 9A,

- la figure 9D représente la table de décodage du décodeur constituant le sous-multiplieur de la figure 9C

- la figure 10 illustre l'organisation d'un multiplieur 16 bits à l'aide de la représentation symbolique de la figure 9,

- la figure 11 est une représentation de l'organisation d'un multiplieur selon l'invention à l'aide de la représentation symbolique de la figure 9,

- la figure 12 est un mode de représentation détaillé du multiplieur selon l'invention,

- les figures 13 et 14 des tables de décodage.

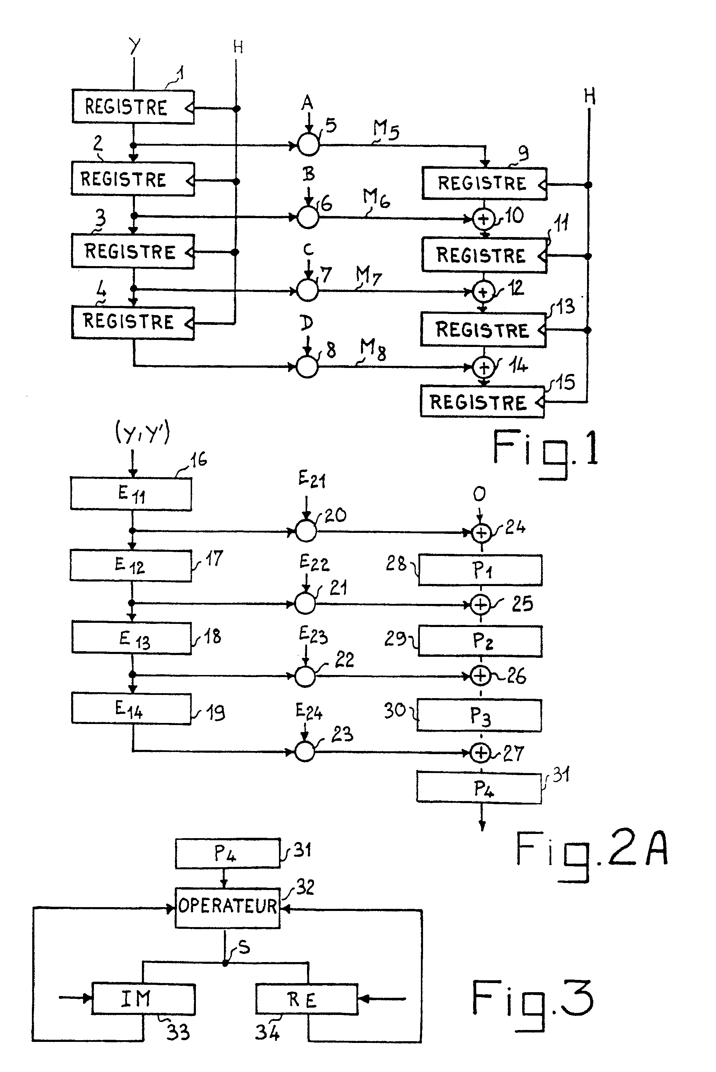

La méthode directe communément employée pour multiplier deux nombres réels codés sur N bits consiste à additionner le multiplicande décalé de K rangs vers la gauche lorsque le bit de numéro K du multiplieur est égal à 1. Cette méthode, lorsqu'elle est réalisée en logique câblée donne lieu à un grand nombre de portes logiques qui croît comme $N^2$ le carré du nombre de bits de chaque nombre binaire à multiplier et présente un temps d'exécution qui correspondant à environ N additions de N bits. Pour pallier cet inconvénient les concepteurs utilisent souvent une autre méthode qui consiste à décomposer la multiplication de N bits par N bits, en n multiplication de N bits par $\frac{N}{n}$ bits. Selon cette méthode qui est illustrée à la figure 1, le multiplicande d'un nombre binaire Y est propagé au rythme d'une horloge H au travers de 4 registres référencés de 1 à 4 et le multiplieur X est décomposé en mots A, B, C et D de $\frac{N}{n}$ bits. Des multiplieurs 5, 6, 7 et 8 effectuent respectivement le produit du nombre Y qui est propagé dans les registres 1, 2, 3 et 4, par les mots A, B, C, D du nombre X décomposé de façon telle que les résultats partiels obtenus en sortie de chacun des multiplieurs 5, 6, 7 et 8 soient $M_5 = Y \times A$, $M_6 = 2^{14}Y \times B$, $M_7 = 2^8Y \times C$ et $M_8 = 2^{12}Y \times D$

avec     $A = X_3 \times 2^3 + .. + X_0$
            $B = X_7 \times 2^3 + ... + X_4$
            $C = X_{11} \times 2^3 + .. + X_8$
            $D = X_{15} \times 2^3 + .. + X_{12}$

Le résultat de la multiplication effectuée par le multiplieur 5 est rangé dans un registre 9 au rythme d'une l'horloge H, puis le contenu du registre 9 est additionné par un additionneur 10 au résultat $M_6$ fourni par le multiplieur 6. Le résultat de l'addition $M_5 + M_6$ est mémorisé dans un registre 11. La sortie du registre 11 est également appliquée au rythme de l'horloge H sur une première entrée d'opérande d'un additionneur 12 dont la deuxième entrée d'opérande reçoit la sortie du multiplieur 7 et le résultat $M_5 + M_6 + M_7$ de l'addition effectué sur ses deux opérandes est mémorisé à l'intérieur d'un registre 13. Le contenu du registre 13 est à son tour appliqué à une première entrée d'opérande d'un additionneur 14 dont la deuxième entrée d'opérande est reliée à la sortie du multiplieur 8 et le résultat $M_5 + M_6 + M_7 + M_8$ de l'addition effectué par l'additionneur 14 sur les deux opérandes est rangé à l'intérieur d'un registre 15 au rythme de l'horloge H. L'horloge H est ajustée en fonction du temps nécessaire à une multiplication $16 \times 4$ qui est à peu près le quart du temps nécessaire à une multiplication $16 \times 16$. La méthode qui vient d'être exposée permet par conséquent d'amener deux nouveaux opérandes à chaque top de l'horloge et le nombre de multiplications par seconde dont ce multiplieur est capable est dans ces conditions quatre fois plus élevé que celui que l'on peut obtenir par la méthode directe.

Le principe de la multiplication qui vient d'être exposé reste valable moyennant certains précautions concernant les bits de signe des deux opérandes, lorsque les nombres sont codés en complément à 2 avec un bit de signe au MSB.

3

Comme la vitesse de calcul du multiplieur est liée à l'horloge H qui elle-même est liée au temps nécessaire à la multiplication d'un nombre N bits par un nombre de $\frac{N}{n}$ bits, des efforts ont été faits pour tenter de réduire ce temps. En utilisant la méthode classique de décalage et additions pour effectuer le produit d'un nombre de N bits par un nombre de L bits, L étant égal à $\frac{N}{n}$, le temps d'exécution maximal est atteint lorsque L bits du multiplieur sont égaux à L, puisqu'on effectue alors L additions. L'amélioration la plus connue est celle apportée par les algorithmes de BOOTH, elle tire parti du fait que lorsque le multiplieur contient une suite de 1 consécutifs, telle que...

$$\underset{2^{k'}}{00111} \cdots \underset{2^{K1}}{111001} \cdots,$$

les K'- K + 1 additions peuvent être remplacées par une addition et une soustraction puisque la relation :
$2^{K'} + 2^{K'-1} + ... + 2^{K} = 2^{K'+1} - 2^{K}$
est toujours vérifiée. Le temps de multiplication élémentaire maximum est dans ces conditions réduit.

On pourra se reporter utilement pour la description de ces algorithmes à l'article de Mac Sorley publié dans la revue PROC. OF IRE, de janvier 1961.

Dans la pratique, il est souvent plus aisé de mettre en oeuvre des tranches de multiplieurs de N bits par L bits avec L petit, car l'algorithme de BOOTH devient de plus en plus compliqué à mettre en oeuvre lorsque L devient supérieur à quatre. Avec les technologies NMOS actuelles, le temps de transit à travers une tranche de multiplieurs de 16 × 4 est inférieur à 100 ns et la limitation de la vitesse du multiplieur total de 16 × 16 vient de la difficulté d'amener les opérandes X et Y aux bornes du multiplieur à chaque top de l'horloge H. Ainsi, lorsque le multiplieur est intégré dans un microprocesseur de traitement du signal, le temps de cycle d'une instruction est souvent un multiple du temps de cycle de l'horloge H c'est-à-dire de deux ou quatre.

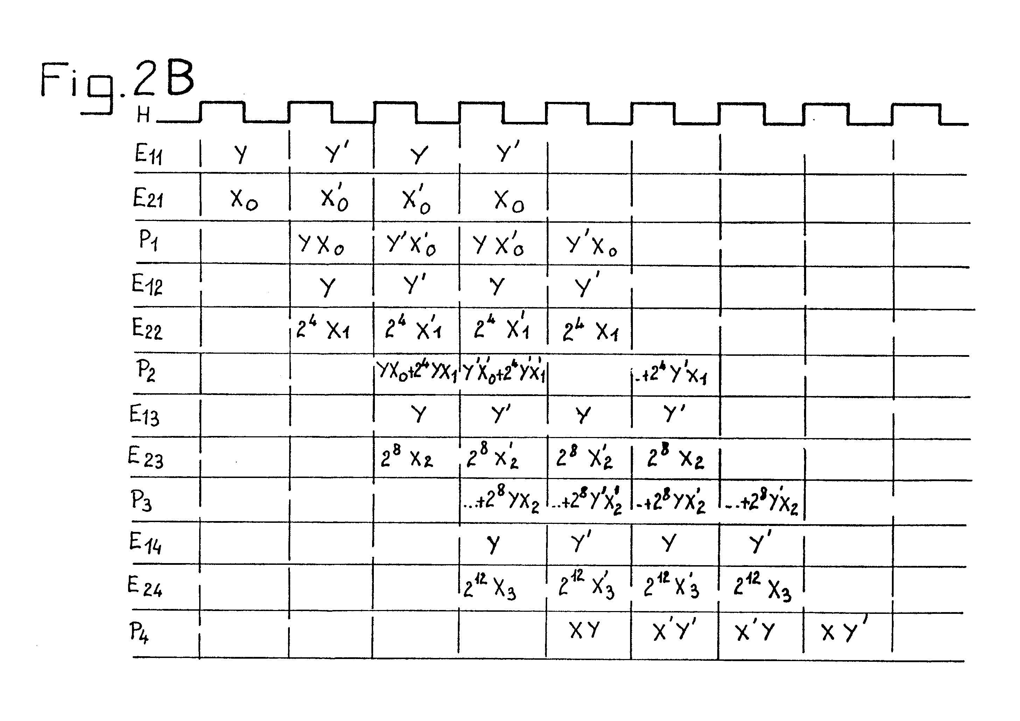

La multiplication de deux nombres complexes X + jX' et Y + jY' formés chacun d'une partie réelle (X, Y) et d'une partie imaginaire (X', Y') codées chacune sur N bits est classiquement réalisée à l'aide d'un dispositif du type de celui qui est représenté à la figure 2A (où N = 16). Ce dispositif comporte typiquement quatre registres 16, 17, 18 et 19, quatre circuits multiplieurs référencés de 20 à 23, quatre circuits additionneurs référencés de 24 à 27 et quatre registres référencés de 28 à 31. Les premières entrées d'opérande des multiplieurs 20 à 23 sont reliées respectivement aux sorties des registres 16 à 19. Ces multiplieurs reçoivent respectivement sur leur deuxième entrée d'opérande des mots binaires $E_{21}$, $E_{22}$, $E_{23}$ et $E_{24}$ qui représentent les quatre mots de quatre bits du nombre multiplieur. La sortie du multiplieur 20 est appliquée à une première entrée d'opérande d'un additionneur 24 dont la deuxième entrée d'opérande reçoit un nombre binaire nul, le résultat P1 de l'addition est chargé à l'intérieur du registre 28. Le contenu P1 du registre 28 est ajouté dans l'additionneur 25 au résultat fourni par la sortie du multiplieur 21 et le résultat P2 est chargé à l'intérieur du registre 29. De même le contenu P2 du registre 29 est additionné par l'additionneur 26 au résultat fourni par le circuit multiplieur 22 et le résultat P3 est chargé à l'intérieur du registre 30. Enfin le contenu P3 du registre 30 est additionné par l'additionneur 27 au résultat fourni par le circuit multiplieur 23 et le résultat P4 obtenu est chargé à l'intérieur du registre 31. L'ensemble des opérations qui viennent d'être décrites est effectué au rythme d'un signal d'horloge H de la façon représentée à l'aide du tableau de la figure 2B.

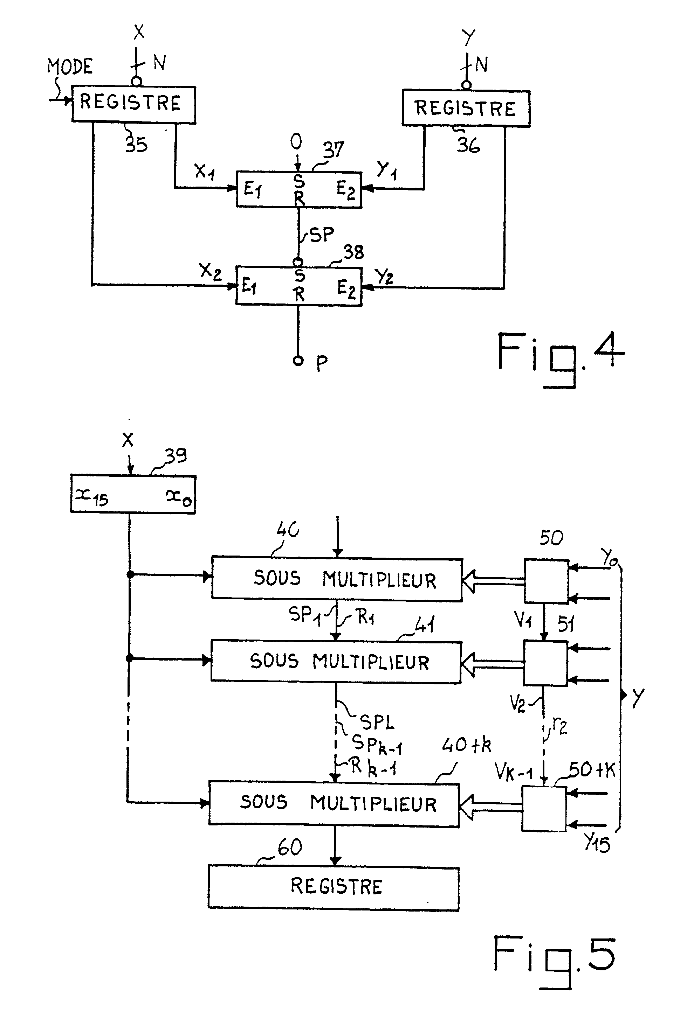

Ce tableau fait apparaître les quatre produits partiels XY, X'Y', X'Y et XY' du produit complexe (Y + jY')(X + jX'). Ces produits apparaissent dans le registre 31 avec un retard de quatre périodes d'horloge H. Pour obtenir le résultat de la multiplication complexe il est par conséquent nécessaire d'adjoindre à la sortie du registre 31 deux registres accumulateurs 33 et 34 tous deux reliés à la sortie d'un opérateur 32 de la manière représentée à la figure 3. Si IM et RE désignent les contenus des registres 33 et 34, l'opérateur 32 assure les opérations S = P4, S = IM + P4 ou S = RE - P4. Cet opérateur permet d'effectuer la multiplication complexe en quatre périodes d'horloge H. En considérant par exemple le cas où les opérations précédentes sont effectuées à l'aide d'un microprocesseur dont l'horloge instruction est égale à $\frac{H}{2}$, la multiplication complexe ne durera dans ces conditions que le temps d'amener les deux parties réelles de 16 bits et les deux parties imaginaires de 16 bits à l'entrée du circuit multiplieur, soit le temps de deux instructions si le microprocesseur est pourvu de deux mémoires.

Les multiplieurs réels et complexes qui viennent d'être décrits sont réalisés à l'aide de structures figées qui ne permettent pas de s'adapter aisément à des situations où par exemple les nombres complexes peuvent avoir des longueurs variables comme c'est le cas de certaines applications où les opérandes peuvent avoir des longueurs de 8 bits. Dans certaines applications un mot de 16 bits peut véhiculer à lui tout seul un nombre complexe à parties réelle ou imaginaire à 8 bits et dans ces situations un seul cycle d'instruction est nécessaire pour l'amener à une entrée du multiplieur. Le dispositif selon l'invention qui est représenté à la figure 4 permet d'effectuer ces diverses opérations en ne demandant que peu de modifications à la structure des multiplieurs complexes 16 × 16 précédemment décrite. Ce dispositif permet en particulier d'effectuer à une fréquence deux fois plus élevée une multiplication de deux nombres complexes 8 bits plus 8 bits.

Le dispositif selon l'invention qui est représenté à la figure 4 comprend un premier registre 35 sur l'entrée duquel est appliqué le nombre multiplieur X de N bits, un deuxième registre 36 sur l'entrée duquel est appliqué le nombre multiplicande Y de N bits, un premier opérateur 37 et un deuxième opérateur 38 ayant chacun trois entrées E1, E2 et S et une sortie R. Chacun des opérateurs 37 et 38 effectue le produit des nombres appliqués sur leurs entrées E1 et E2 et additionne le résultat obtenu au nombre qui est appliqué sur leur entrée S. En désignant par $X_1$ les $\frac{N}{2}$ bits de poids les plus faibles du registre 35, par $X_2$ les $\frac{N}{2}$ bits de poids les plus forts du registre 35 et respectivement par $Y_1$ et $Y_2$ les bits de poids les plus faibles et les plus forts du registre 36, les bits $X_1$ et $Y_1$ sont appliqués respectivement sur les entrées E1 et E2 du premier opérateur 37 et les bits $X_2$ et $Y_2$ sont appliqués respectivement sur les entrées E1 et E2 du deuxième opérateur 38.

Le multiplieur qui vient d'être décrit permet d'effectuer des opérations de multiplication sur des nombres X, Y réels ou complexes écrits dans un format comprenant N bits.

Dans le format réel X vérifie la relation

$$X = 2^{\frac{N}{2}} X'' + X'$$

et dans le format complexe X vérifie la relation $X = X' + JX''$, X' représentant la partie réelle et $JX''$ représentant la partie imaginaire.

Le multiplieur de la figure 4 effectue le produit $P = X \times Y$ des nombres X et Y appliqués respectivement sur les entrées des registres 35 et 36. Le nombre Y est partagé en deux nombres

$$Y1 = Y' \text{ et } Y2 = Y'' \times 2^{\frac{N}{2}}.$$

Suivant le mode de fonctionnement, mode réel ou mode complexe les valeurs données à Xl et X2 sont différentes.

En mode réel

$$X1 = X2 = X = (X' + 2^{\frac{N}{2}} \times X'').$$

En mode complexe pour le calcul de la partie réelle

$$X1 = X' \times 2^{\frac{N}{2}}$$

et X2 = -X" et pour le calcul de la partie imaginaire

$$X1 = X'' \times 2^{\frac{N}{2}}$$

et X2 = X'.

L'intérêt de la structure qui est représentée à la figure 4 réside dans le fait que tout en gardant une structure compatible d'un multiplieur traitant des nombres réels, il est possible de réaliser des multiplications complexes deux fois plus rapidement que si l'on disposait d'un multiplieur standard. Le résultat est obtenu à un décalage près de

$$2^{\frac{\overline{N}}{2}}.$$

L'opération s'effectue en deux étapes. Le calcul de la partie réelle est effectué durant la première étape et le calcul de la partie imaginaire est effectué durant la deuxième étape. En utilisant les notations précédentes et en désignant par SP le résultat de calcul fourni par le premier opérateur 37 et par P le résultat de calcul fourni par le deuxième opérateur 38, le calcul de la partie réelle effectué à la première étape donne

$$SP = X1 \times Y1 = X' \times Y' \times 2^{\frac{N}{2}}$$

$$et\ P = X2 \times Y2 + S = 2^{\frac{N}{2}}(X'\ Y' - X''\ Y'')$$

et le calcul de la partie imaginaire effectué à la deuxième étape donne

$$SP = X1 \times Y1 = X'' \times Y' \times 2^{\frac{N}{2}}$$

$$P = X2\ Y2 + S = 2^{\frac{N}{2}}(X'' \times Y' + X' \times Y'')$$

L'opération de multiplication s'effectue par conséquent en deux cycles alors que avec un multiplieur standard il faudrait quatre cycles (puisqu'il y a quatre multiplications X' Y', X' Y'', X'' Y', X'' Y'' sans compter les additions supplémentaires qui sont à réaliser).

En mode réel le multiplieur de la figure 4 donne les résultats suivants :

$$SP = X1 \times Y1 = (2^{\frac{N}{2}} \times X'' + X') \times Y'$$

$$P = X2\ Y2 + S = (2^{\frac{N}{2}} \times X'' + X') \times 2^{\frac{N}{2}}\ Y'' + S$$

$$= (2^{\frac{N}{2}} \times X'' + X') \times (2^{\frac{N}{2}} \times Y'' + Y')$$

$$= X \times Y$$

L'architecture du multiplieur selon l'invention qui vient d'être décrite est indépendante de la méthode retenue pour exécuter la multiplication (algorithme de BOOTH par exemple qui décompose le multiplieur en sous-multiplieurs traitant deux bits du nombre Y) elle est aussi indépendante du nombre de registres internes étages tampons si l'on désire par exemple réaliser un multiplieur utilisant la technique "pipe-line".

Ce multiplieur présente aussi comme autre intérêt que les additions complémentaires pour calculer les parties réelles et imaginaires ne nécessitent pas de circuits supplémentaires car elles sont automatiquement réalisées par les sous-multiplieurs.

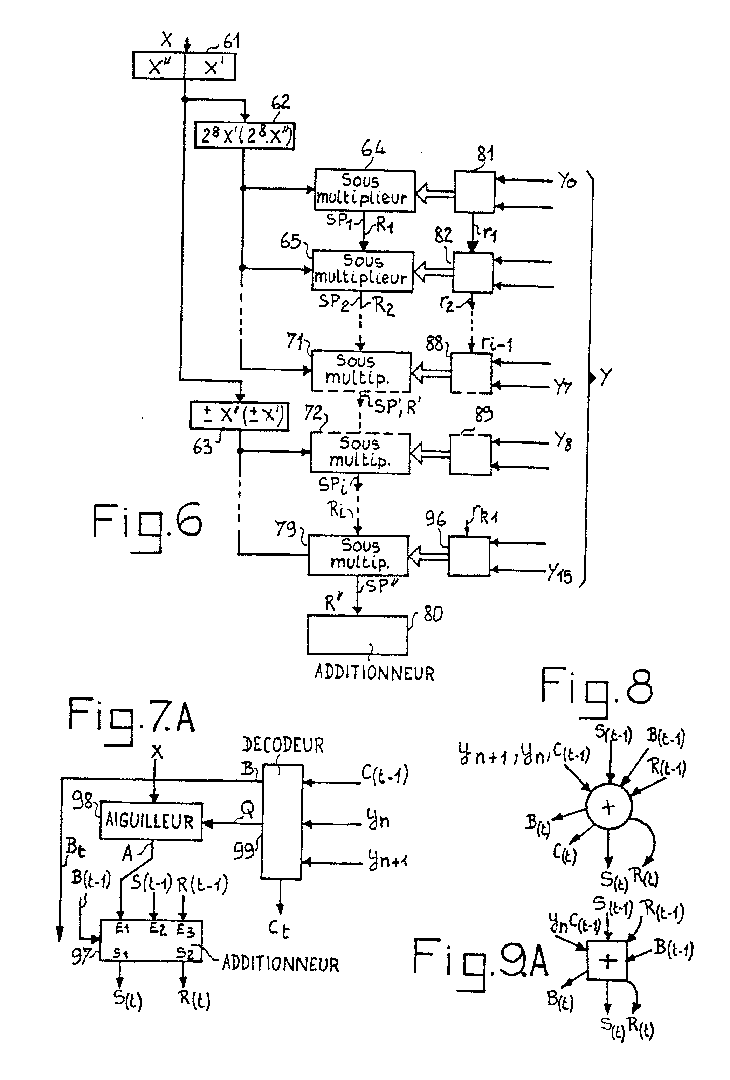

Une application du principe de l'invention à la réalisation d'un circuit multiplieur sur des nombres réels est représentée à la figure 5 dans le cas ou les nombres sont représentés sur 16 bits. Ce circuit multiplieur comprend un registre 39 de mémorisation du multiplicande X qui est couplé à des premières entrées d'opérande de K sous multiplieurs notés respectivement de 40 à 40 + K, les deuxièmes entrées d'opérande de ces multiplieurs étant reliées à des moyens de traitement notés respectivement de 50 à 50 + K du nombre multiplieur Y.

Le multiplieur agit par additions successives de produits partiels en commençant par celui qui concerne le bit Y0 du nombre multiplieur Y. La structure est faite de façon qu'à la sortie d'un sous-multiplieur L quelconque on obtienne un sous produit $SP_L$ formé par un nombre de $(16 + n_L + 1)$ bits signés, un vecteur de retenue RL attaché aux résultats SPL et un indicateur $r_L$ tels que si l'on propageait les retenues du vecteur $r_L$ dans le résultat SPL on obtiendrait à un décalage près, mais avec un signe exact, le nombre

$$X \times (Yn_L + 2^{-1} Yn_{L-1} + \ldots + 2^{-n_L} Y0) - 2r_L X.$$

En sortie de l'étage 50 + K qui traite le bit Y15 l'indicateur r est nul et la propagation du vecteur de retenues R dans le sous produit SP donne un nombre exactement égal au produit signé XY.

Le multiplieur de la figure 5 est aménagé selon le mode de réalisation de la figure 6 pour lui permettre d'effectuer des produits de nombres complexes codés sur 16 bits. Comme sur la figure 5 le multiplicande X est mémorisé sur la figure 6 à l'intérieur d'un registre 61 mais à la différence de la figure 5 le registre 61 est relié par l'intermédiaire de registres 62 et 63 respectivement d'une part, aux premières entrées d'opérande de circuits multiplieurs 64 à 71 et d'autre part, aux premières entrées d'opérande de circuits sous-multiplieurs 72 à 79. Chaque sous-produit SPL obtenu d'un circuit sous-multiplieur est propagé dans le sous-multiplieur suivant et le sous-produit final obtenu du sous-multiplieur 79 est enregistré dans un additionneur 80. Comme sur la figure 5 des moyens de traitement 81, 82 à 96 exécutent des traitements sur le nombre multiplieur Y et appliquent par l'intermédiaire des moyens de traitement 81, 82 et 96 le résultat de ce traitement sur les deuxièmes entrées d'opérande des sous-multiplieurs 64 à 79.

Le nombre multiplicande X est formé d'une partie réelle X' et d'une partie imaginaire X'' qui représentent le nombre complexe X = X' + JX''

Le nombre X est formé d'un nombre de 16 bits (X15 à X0). Le nombre X' est de la forme

X' = -X7 + $2^{-1}$ X6 + ... + $2^{-7}$ X0

et le nombre X'' est de la forme

X'' = -X15 + $2^{-1}$ X14 + ... + $2^{-7}$ X8

le nombre Y qui représente le nombre multiplieur est codé de la même façon. Les circuits de la figure 6 décomposent l'opération de multiplication en deux phases consécutives, consistant d'une part, à calculer la partie réelle du produit X' Y' - X'' Y''

et d'autre part, à calculer la partie imaginaire du produit soit X' Y'' + X'' Y'.

Durant la première phase la partie réelle du produit est calculée en présentant la valeur signée $2^8$ X' dans le registre 62 et la valeur -X'' dans le registre 63. Le sous-multiplieur 71 traitant le bit Y7 fournit un sous-produit SP' et un vecteur de retenue R', qui s'ils étaient assemblés seraient égaux au produit $2^8$ X' Y'. SP' et R' sont présentés à l'entrée du sous-multiplieur 72 traitant le bit Y8. Le sous-multiplieur 79 fournit un sous-produit SP'' et un vecteur de retenues R'' qui assemblés par l'additionneur 80 sont égaux à $2^8$ X' Y' - $2^8$ X'' Y''.

Durant la deuxième phase la partie imaginaire du produit est calculée. L'opération se déroule de la même façon que précédemment en présentant le nombre binaire $2^8$ X'' au lieu du nombre binaire $2^8$ X' dans le registre 62 et le nombre binaire X' au lieu de -X'' à l'entrée du sous-multiplieur 72 traitant le bit Y8. Ces résultats sont obtenus moyennant une réalisation particulière du sous-multiplieur 71 et du moyen de traitement 88 qui sont organisés de façon que l'indicateur de retenue r à la sortie du moyen de traitement 88 ait toujours une valeur nulle, c'est-à-dire que le sous produit SP et le vecteur de retenues R obtenus à la sortie du sous-multiplieurs 71 forment le produit exact du nombre de 8 bits signés de Y7 à Y0 par le nombre de 16 bits signés présentés à l'entrée du sous-multiplieur traitant le bit Y0.

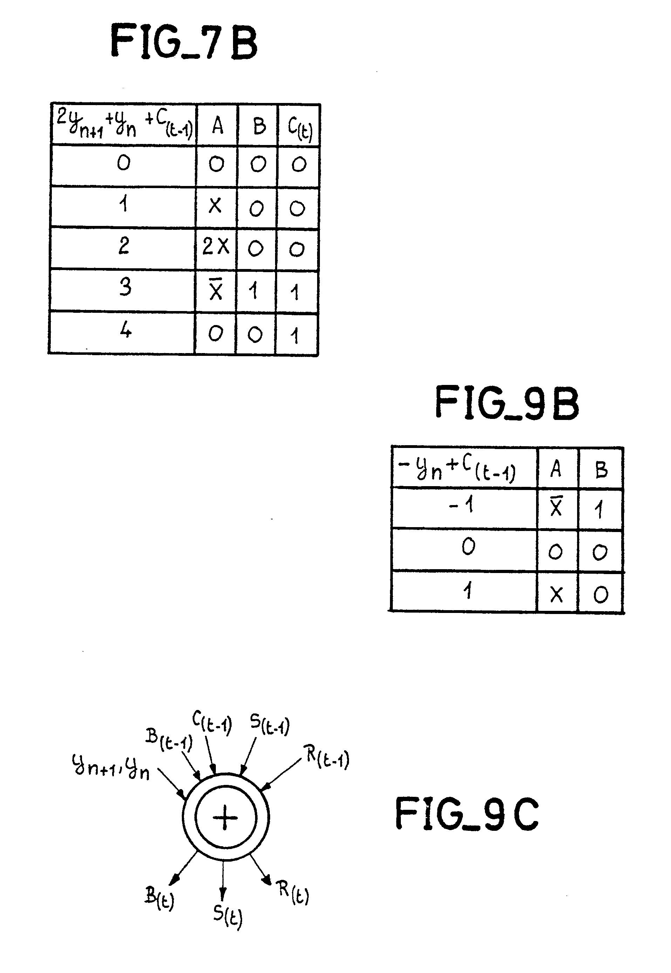

Les sous-multiplieurs utilisés pour la mise en oeuvre du multiplieur selon l'invention sont d'un type particulier et un exemple de réalisation de ces sous-multiplieurs est représenté à la figure 7A. Le sous-multiplieur représenté à la figure 7A comprend un additionneur à trois entrées 97, un aiguilleur 98 et un décodeur 99. L'aiguilleur 98 est commandé à partir du décodeur 99 dont la table de décodage est représentée à la figure 7B. Le décodeur 99 possède trois entrées sur lesquelles sont appliquées respectivement un bit de report $C_{(t-1)}$ provenant, dans l'assemblage des sous-multiplieurs pour former le multiplieur complet, du sous-multiplieur précédent, et les bits $Y_n$ et $Y_{n+1}$ de rangs n et n+1 du nombre multiplieur Y. Le décodeur 99 possède également trois sorties notées B, Q et $C_t$. La sortie B prend l'état 0 lorsque la somme des nombres binaires $2Y_{n+1} + Y_n + C_{t-1}$ est égale à 0, 1, 2 ou 4 et prend la valeur binaire de 1 lorsque cette somme de nombres binaires est égale à trois. La sortie Q du décodeur commande l'aiguilleur 98 qui fournit sur sa sortie les nombres O, X, 2X ou $\overline{X}$ en fonction des valeurs de $2Y_{n+1} + Y_n + C_{t-1}$. Le nombre O est obtenu lorsque la somme $2Y_{n+1} + Y_n + C_{t-1}$ est égale à O ou 4. La sortie A restitue la valeur du multiplicande X qui est appliqué sur l'entrée de l'aiguilleur 98, lorsque la

EP 0 209 446 B1

somme $2Y_{n+1}$ + $Y_n$ + $C_{t-1}$ est égale à 1 ou le produit 2X lorsque $2Y_n$ + $Y_n$ + $C_{t-1}$ est égale à 2 ou encore la valeur de X complémentée ($\overline{X}$) lorsque la somme $2Y_{n+1}$ + $Y_n$ + $C_{t-1}$ est égale à 3. L'additionneur 97 effectue l'addition du mot binaire obtenu à la sortie A de l'aiguilleur avec les deux sorties S(t-1) et R(t-1) du sous-multiplieur précédent en tenant compte de l'état du bit $B_{(t-1)}$) provenant du sous-multiplieur précédent. Le résultat de cette addition apparaît sous la forme d'une somme $S_{(t)}$ à la sortie S1 de l'additionneur et sous la forme d'un report $R_{(t)}$ sur la sortie S2 de l'additionneur 97. Le multiplieur selon l'invention est réalisé à l'aide de sept sous-multiplieurs du type de celui qui vient d'être décrit à l'aide des figures 7A et 7B. Le sous-multiplieur qui vient d'être décrit est représenté sous une forme symbolique simplifiée à la figure 8. Dans la forme simplifiée qui est représentée à la figure 8 le sous-multiplieur possède 5 entrées. Une première entrée reçoit les dibits adjacents $Y_{n+1}$ et $Y_n$ d'ordre n et n+1 du mot Y, une deuxième entrée reçoit le résultat obtenu du sous-multiplieur précédent $S_{(t-1)}$ une troisième entrée reçoit le report $R_{(t-1)}$ une quatrième entrée reçoit le bit de retenues $C_{(t-1)}$ et enfin une cinquième entrée reçoit le bit correcteur $B_{(t-1)}$ provenant du sous-multiplieur précédent. Il fournit sur deux sorties un résultat S et un report R. Dans le mode de réalisation préféré de l'invention la réalisation du multiplieur nécessite outre les sous-multiplieurs qui viennent d'être décrits, l'utilisation d'un autre sous-ensemble de nature un peu particulière puisqu'il traite un bit de signe, ce dernier sous-ensemble est désigné par le symbole graphique qui est représenté à la figure 9A et présente le tableau de vérité de la figure 9B. Dans sa structure il est équivalent à celui que a été décrit à l'aide de la figure 7A, la différence réside uniquement du décodage qui est fait par le décodeur 99 qui ne prend en compte que le bit -$Y_n$ et le bit de report $C_{(t-1)}$ du décodeur précédent. Dans le tableau de vérité de la figure 9B lorsque la somme -$Y_n$ + $C_{(t-1)}$ est égale à -1 la sortie A de l'aiguilleur fournit la valeur complémentée du nombre X qui est présent à l'entrée de l'aiguilleur et le bit B fourni par le décodeur prend la valeur 1. Lorsque la somme -$Y_n$ + $C_{(t-1)}$ est égale à 0 la sortie A de l'aiguilleur prend l'état 0 et la sortie B du décodeur 99 prend l'état 0. Enfin lorsque la somme -$Y_n$ + $C_{(t-1)}$ est égale à 1 la sortie A de l'aiguilleur restitue la valeur du mot X qui est appliquée sur son entrée et le bit fourni par la sortie B des décodeurs 99 prend l'état 0.

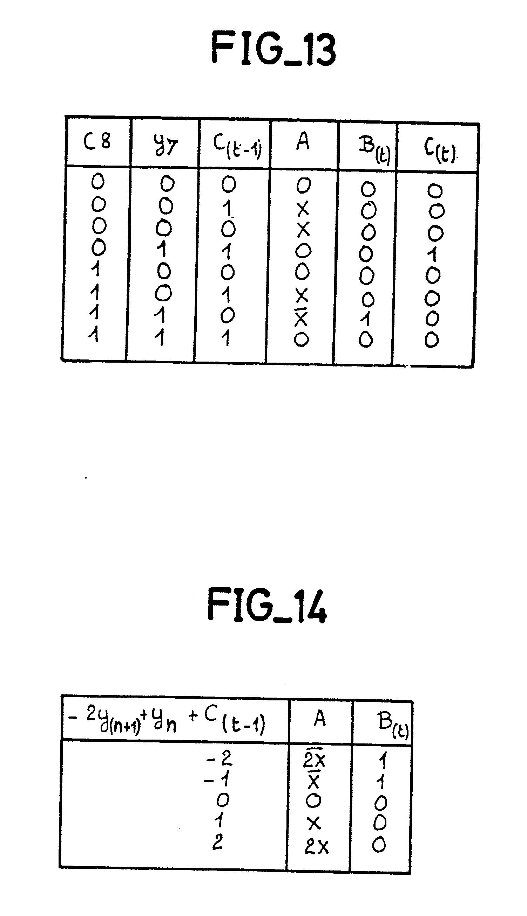

Enfin un dernier type de sous-multiplieur est utilisé pour traiter également un bit de signe et sa table de vérité est représentée à la figure 14. Une représentation symbolique de ce sous-multiplieur est montrée à la figure 9C.

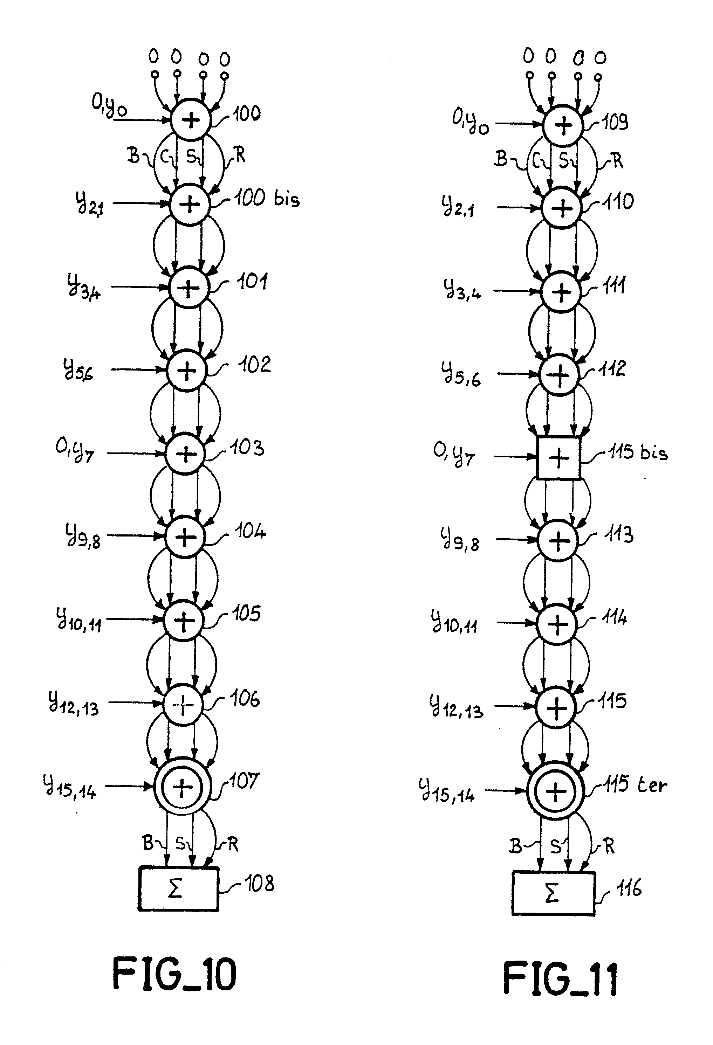

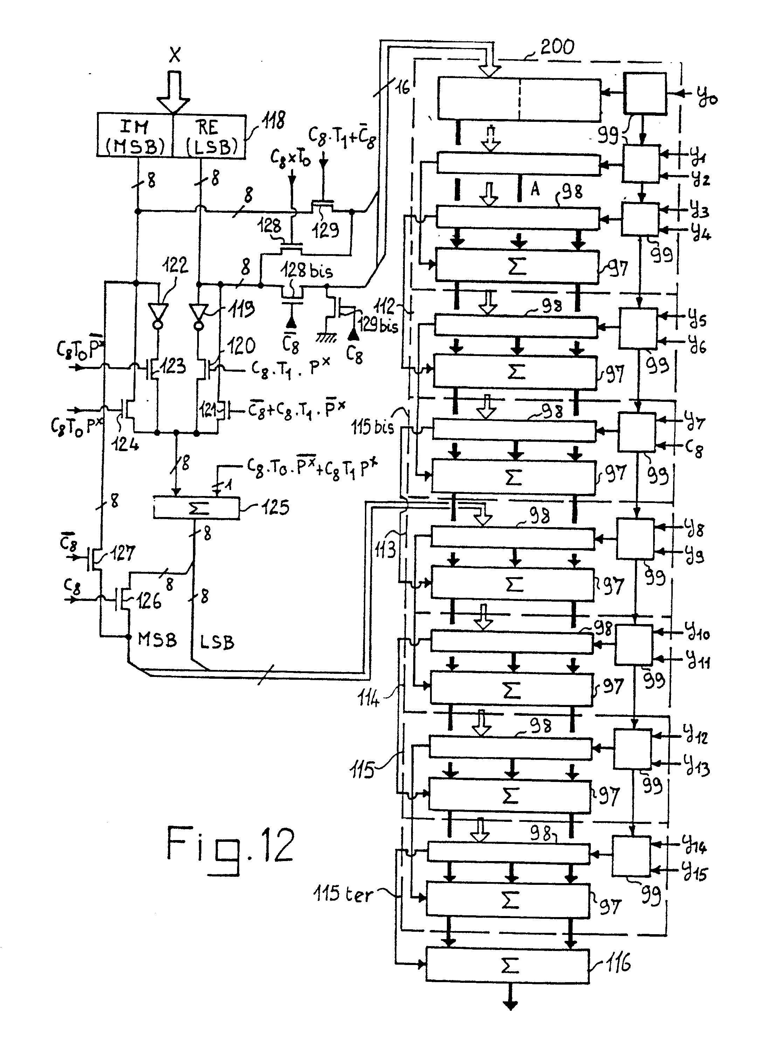

Les sous-ensembles qui viennent d'être décrits à l'aide des figures 7A, 8, 9A et 9C permettent de réaliser des multiplieurs pour la multiplication de nombres réels ou complexes du type de ceux qui sont représentés aux figures 10 et 11 et dont la représentation utilise le symbolisme des figures 8, 9A et 9C.

La figure 10 illustre un mode de réalisation d'un multiplieur de nombres réels, il est constitué de 9 sous-multiplieurs notés respectivement de 100, 100bis à 108 et d'un sommateur rapide 108bis donnant le résultat final à partir de la dernière somme partielle et de retenues associées.

La figure 11 illustre un mode de réalisation d'un multiplieur de nombres complexes huit bits, ce multiplieur étant composé de 7 sous-multiplieurs 109 à 115 du type de celui représenté à la figure 8, d'un sous-multiplieur 115bis du type de celui qui est représenté à la figure 9A et du sous-multiplieur particulier 115ter du type représenté à la figure 9C. Le multiplieur comprend également un circuit additionneur rapide 116.

Ce dernier mode de réalisation est représenté plus en détails sur le schéma de la figure 12 où l'on retrouve à l'intérieur de rectangles en pointillés les sous-multiplieurs 112 à 115ter de la figure 11. Le multiplieur représenté à la figure 11 comprend une partie supérieure pour traiter les bits du multiplieur de Y1 à Y7 et une partie inférieure qui traite les bits du multiplieur de Y8 à Y15. La partie supérieure comprend des sous-multiplieurs 112 et 115bis et une logique 200 qui regroupe les fonctionnalités des sous-multiplieurs 109, 110 et 111 et la partie inférieure comprend les sous-multiplieurs 113, 114, 115 et 115ter. Les bits du multiplieur Y0 à Y4 sont appliqués sur la logique 200, les bits Y5 Y6 sont appliqués sur le sous-multiplieur 112, le bit Y7 est appliqué sur le sous-multiplieur 115bis en même temps que le bit C8 indiquant le type de multiplication, complexe ou réel. Dans la partie inférieure les bits Y8 et Y9 sont appliqués sur le multiplieur 113, les bits Y10 et Y11 sont appliqués sur le sous-multiplieur 114, les bits Y12 et Y13 sont appliqués sur le sous-multiplieur 115 et les bits Y14 et Y15 sont appliqués sur le sous-multiplieur 115ter. Dans l'exemple de réalisation de la figure 12 les décodeurs 99 de la logique 200 des sous-multiplieurs 113 à 115 ont une table de décodage qui est conforme à celle de la figure 7B, le décodeur 99 du sous-multiplieur 115bis a une table de décodage qui est conforme à celle représentée à la figure 13 qui est une version plus évoluée de la table de la figure 9A et le décodeur 99 du sous-multiplieur 115ter possède une table de décodage conforme à celle de la figure 14. Le multiplieur de la figure 12 permet d'effectuer indifféremment des opérations sur des nombres réels et sur des nombres complexes. Il est muni d'une entrée supérieure formée de la logique 200 et d'une entrée inférieure qui est constituée par le sous-multiplieur 113. L'aiguillage entre les entrées supérieures et inférieures est effectué à l'aide d'un circuit formé des éléments 118 à 129. Cet aiguilleur reçoit des signaux de commande désignés par C8, P*, $T_0$ et $T_1$. C8 indique le mode complexe huit bits. P* indique qu'il s'agit d'effectuer le produit conjugué X × Y*. $T_0$ commande la première phase de calcul correspondant au calcul de la partie réelle du produit entre les deux nombres X et Y et $T_1$ commande la deuxième phase de calcul de la partie imaginaire du produit entre les deux nombres X et Y. L'aiguilleur comprend un registre 118 pour charger le multiplicande X dont les parties réelles RE et imaginaires IM occupent respectivement les huit premiers bits et les huit bits suivants du registre 118. Les huit premiers bits représentant la partie réelle RE du nombre X sont appliqués au travers de l'interrupteur 128bis en mode réel directement à l'entrée de la logique 200 ou sont appliqués sur l'entrée inférieure du multiplieur au travers d'un inverseur 119, d'interrupteurs 120, 121 et d'un sommateur 125. En mode complexe (C8 = 1) les 8 premiers bits appliqués à la logique 203 sont mis à zéro. L'interrupteur 120 est ouvert lorsque la condition C8 × $T_1$ × P* est réalisée et l'interrupteur 121 est ouvert lorsque la condition

$$\overline{C8} + C8 \times T_1 \times \overline{P^*}$$

est réalisée. Les 8 derniers bits du registre 118 sont appliqués à la logique 200 au travers de l'interrupteur 129 lorsque la condition C8 × $T_1$ + $\overline{C}$ 8 est réalisée, ils sont transmis à la partie inférieure au travers , soit de l'inverseur 122 et de l'interrupteur 123 lorsque la condition

$$C8 \times T_0 \times \overline{P^*}$$

est réalisée, soit au travers de l'interrupteur 124 lorsque la condition C8 × $T_0$ × P* est réalisée et au travers du sommateur 125. Les bits de poids les plus forts du registre 118 peuvent être également transmis directement à l'entrée du multiplieur 111 au travers de l'interrupteur 127 et à l'entrée de la logique 200 au travers de l'interrupteur 129 lorsque la condition $\overline{C8}$ est réalisée.

L'interrupteur 126 duplique 8 fois le bit de poids fort du sommateur 125 et l'applique à l'entrée du sous-multiplieur 113 dans le mode de fonctionnement complexe.

L'aiguilleur qui vient d'être décrit a pour avantage qu'il permet d'appliquer le même nombre multiplicande X sur les entrées supérieures et inférieures du multiplieur lorsqu'il s'agit d'une multiplication de nombres réels et qu'il permet lorsqu'il s'agit d'une multiplication de nombres complexes d'effectuer la multiplication de nombres complexes x Y suivant les relations
X Y = ($X_{RE}$ × $Y_{RE}$ - $X_{IM}$ × $Y_{IM}$) + j($X_{IM}$ × $Y_{RE}$ + $X_{RE}$ × $Y_{IM}$) ou X Y* = ($X_{RE}$ × $Y_{RE}$ + $X_{IM}$ × $Y_{IM}$) + l($X_{IM}$ × $Y_{RE}$ - $X_{RE}$ × $Y_{IM}$). Le calcul Le calcul des parties réelles de X Y ou de X Y* s'effectue lors d'un premier cycle commandé par le signal $T_0$ et le calcul des parties imaginaires lors d'un deuxième cycle de calcul commandé par le signal TI. Dans le cas du calcul du produit X Y les entrées de poids fort de la partie supérieure du multiplieur reçoivent lors du premier cycle la partie réelle $X_{RE}$ et lors du calcul de la partie imaginaire qui a lieu pendant le deuxième cycle la partie $X_{IM}$ imaginaire, cette sélection est effectuée par les interrupteurs 128 et 129, 128bis et 129bis. Dans le cas du calcul du produit X Y conjugué, l'ensemble fonctionne de la même manière en ce qui concerne la partie supérieure.

La partie inférieure reçoit la partie imaginaire -$X_{IM}$ et l'indication de signe de -$X_{IM}$ lors du calcul de la partie réelle du produit X Y et qui a lieu durant le premier cycle de calcul. Et elle reçoit durant le deuxième cycle de calcul de la partie imaginaire la partie réelle $X_{RE}$ du nombre X avec son indication de signe lors du calcul du produit X Y.

Pour le calcul X Y* du produit X par le nombre Y conjugué, la partie inférieure reçoit pendant le premier cycle de calcul le nombre imaginaire $X_{IM}$ et l'indication de signe X de $X_{IM}$ et elle reçoit lors du deuxième cycle de calcul de la partie imaginaire du produit X Y* le nombre -$X_{RE}$ et l'indication de signe du nombre -$X_{RE}$. Cet aiguillage est effectué par les interrupteurs 120 à 124 d'une part, et 127 et 126 d'autre part.

L'exemple qui vient d'être donné d'une réalisation préférée de l'invention n'est pas limitatif, il va de soi que d'autres variantes de réalisation sont possible notamment pour multiplier des nombres complexes ayant des longueurs N quelconques de bits tout en restant dans le cadre fixé par l'invention. En particulier, plusieurs modes de réalisation pourront être envisagés lorsque le multiplieur selon l'invention devra être intégré dans un ensemble plus vaste, formé par exemple par un processeur de traitement de signal ou tout dispositif équivalent pour profiter des avantages de l'architecture déjà fourni par cet ensemble.

## Revendications

1. Multiplieur pour la multiplication de deux nombres complexes X = X' + JX" et Y = Y' + JY", X', X", Y', Y" ayant chacun $\frac{N}{2}$ bits (N nombre entier pair), du type comprenant une première suite (37, 64...71 ; 109, 110, 115bis ; 200, 112, 115bis) et une deuxième suite (38 ; 72, 79 ; 113, 112, 115ter) de K sous-multiplieurs reliés en cascade, chaque suite comprenant des première et deuxième entrées d'opérande ($E_1$ et $E_2$), une troisième entrée (S) et une sortie (R), des nombres X1 et X2 de $\frac{N}{2}$ bits étant appliqués respectivement sur les premières entrées d'opérande de la première et de la deuxième suites et des nombres Y1 et Y2 de $\frac{N}{2}$ bits étant appliqués sur les deuxièmes entrées d'opérande des première et deuxième suites et chaque suite étant agencée de manière à fournir sur sa sortie (R) le produit des nombres binaires appliqués sur ses première et deuxième entrée d'opérande augmenté d'une quantité binaire égale au nombre binaire appliqué sur sa troisième entrée, le résultat fourni à la sortie (R) de la première suite étant appliqué à la troisième entrée (S) de la deuxième suite (S) caractérisé en ce que le multiplieur comprend des moyens d'aiguillage (118...129, 129bis) pour effectuer au cours respectivement d'un premier cycle ($T_0$) et d'un deuxième cycle ($T_1$) le calcul de la partie réelle et de la partie imaginaire du produit des deux nombres complexes X et Y, pendant le premier cycle ($T_0$) les nombres X1, X2, Y1, Y2 ayant respectivement les valeurs

$$X'.2^{\frac{N}{2}}, \; \overset{+}{_-}X", \; Y', \; Y".2^{\frac{N}{2}}$$

et pendant le deuxième cycle ($T_1$) les nombres X1, X2, Y1, Y2 ayant respectivement les valeurs

$$X".2^{\frac{N}{2}}, \; \overset{+}{_-}X', \; Y', \; Y".2^{\frac{N}{2}}.$$

2. Multiplieur selon la revendication 1, caractérisé en ce que les moyens d'aiguillage comprennent en outre des moyens de commande (121, 127, 129) pour opérer la juxtaposition dans un même mot des nombres X1 et X2 telle que

$$X1 = X2 = X = (X' + 2^{\frac{N}{2}}X")$$

et pour appliquer le nombre X à la fois sur les premières entrées d'opérande de la première (37) et de la deuxième suite (38) pour permettre la multiplication des deux nombres X et Y lorsque ces nombres sont réels.

3. Multiplieur selon l'une quelconque des revendications 1 et 2, caractérisé en ce que chaque sous-multiplieur d'une suite comprend un additionneur (97) et un aiguilleur (98) commandés par un décodeur (99) de l'état des dibits adjacents $Y_n$, $Y_{n+1}$ du nombre Y1 ou Y2 appliqué sur les deuxièmes entrées d'opérande des première et deuxième suites, pour appliquer sur une première entrée d'opérande de l'additionneur (97) le nombre X traité au travers de l'aiguilleur (98), le nombre X pouvant prendre les valeurs 0, X, 2X, $\overline{X}$ ou 2X.

4. Multiplieur selon la revendication 3, caractérisé en ce que les sous-multiplieurs comprennent des décodeurs d'un premier type (fig. 8, fig. 7B), chaque décodeur ayant des entrées sur lesquelles sont appliqués les dibits $Y_n$ et $Y_{n+1}$ et un bit de report $C_{t-1}$ provenant du sousmultiplieur qui le précède dans la suite et étant codé de manière que la première entrée d'opérande de l'additionneur (97) reçoive de l'aiguilleur (98) les nombres 0, X, 2X, $\overline{X}$ ou 0 lorsque le poids binaire obtenu de la relation $2Y_{n+1} + Y_n + C_{t-1}$ prend respectivement les valeurs 0, 1, 2, 3 et 4.

5. Multiplieur selon la revendication 4 caractérisé en ce que les sous-multiplieurs comprennent des décodeurs d'un deuxième type (fig. 9C, fig. 14) codé de manière que la première entrée d'opérande de l'additionneur (97) reçoivent de l'aiguilleur (98) les nombres 2$\overline{X}$, $\overline{X}$, 0, X et 2X lorsque le poids binaire obtenu de la relation $-2Y_{n+1} + Y_n + C_{t-1}$ prend respectivement les valeurs -2, -1, 0, 1 et 2.

6. Multiplieur selon la revendication 5, caractérisé en ce que les sous-multiplieurs comprennent un décodeur d'un troisième type (fig. 13) à trois entrées codé de manière que la première entrée d'opérande de l'additionneur (97) reçoive de l'aiguilleur (98) les nombres 0, X, X, 0, 0, X, $\overline{X}$, 0 lorsque le poids binaire du nombre C8, $Y_n$, $C_n$ prend respectivement les valeurs 0 à 7, le bit C8 représentant le mode de multiplication complexe ou réel qui est exécuté par le multiplieur.

7. Multiplieur selon la revendication 6, caractérisé en ce que les sous-multiplieurs de la première suite se composent de deux sous-multiplieurs (109, 111) ayant des décodeurs du premier type et d'un sous-multiplieur (115bis) ayant un décodeur du troisième type et les sous-multiplieurs de la deuxième suite se composent de trois sous-multiplieurs (113, 114 et 115) ayant des décodeurs du premier type et d'un sous-multiplieur (115ter) ayant un décodeur du deuxième type.

8. Processeur de traitement du signal, caractérisé en ce qu'il comprend un multiplieur selon l'une quelconque des revendications 1 à 7.


## Claims

1. A multiplier for the multiplication of two complex numbers $X = X' + JX''$ and $Y = Y' + JY''$, X', X,' Y' and Y'' each having N/2 bits (N being an even whole number), of the type comprising a first series (37, 64..71; 109, 110, 115bis; 200, 112 and 115bis) and a second series (38; 72, 79; 113, 112, 115ter) of X submultipliers connected in series, each series comprising first and second operand inputs ($E_1$ and $E_2$), a third input (S) and an output (R), numbers X1 and X2 with N/2 bits being applied respectively to the first operand inputs of the first and the second series and numbers Y1 and Y2 of N/2 bits being applied to the second operand inputs of the first and the second series and each series being arranged in such a manner that they supply at the output (R) thereof the product of the binary numbers applied to the first and the second operand input increased by a binary quantity equal to the binary number applied at the third input thereof, the result supplied to the output (R) of the first series being applied to the third input (S) of the second series (S), characterized in that the multiplier comprises switching means (118..129, l29bis) in order to perform respectively in the course of a first cycle ($T_0$) and of a second cycle ($T_1$) the calculation of the real part and of the imaginary part of the product of the two complex numbers X and Y, during the first cycle ($T_0$) the numbers X1, X2, Y1 and Y2 respectively having the values $X'.2^{n/2}$, $\pm X''$, Y', $Y''.2^{n/2}$ and during the second cycle ($T_1$) the numbers X1, X2, Y1 and Y2 respectively having the values $X''.2^{n/2}$, $\pm X'$, Y' and $Y''.2^{n/2}$.

2. The multiplier as claimed in claim 1, characterized in that the switching means further comprise command means (121, 127 and 129) in order to effect the juxtaposition in a single word of the numbers X1 and X2 in such a manner that $X1 = X2 = X = (X' + 2n/2X'')$ and in order to apply the number simultaneously to the first operand inputs of the first (37) and of the second (38) series in order to permit the multiplication of the two numbers X and Y when such numbers are real numbers.

3. The multiplier as claimed in claim 1 or in claim 2, characterized in that each submultiplier of a series comprises an adder (97) and a switching means (98) controlled by a decoder (99) for the state of the adjacent double bits $Y_n$ and $Y_{n+1}$ of the number Y1 or Y2 applied to the second operand inputs of the first and second series in order to apply, to a first operand input of the adder (97) the processed number X through the switching means (98), the number X being capable of assuming the values 0, X, 2X $\overline{X}$ or 2X.

4. The multiplier as claimed in claim 3, characterized in that the submultipliers comprise decoders of a first type (figure 8 and figure 7B), each decoder having inputs to which there are applied the double bits $Y_n$ and $Y_{n+1}$ and a carry bit $C_{t-1}$ originating from the submultiplier which precedes it in the series and being encoded in such a manner that the first operand input of the adder (97) receives from the switching means (98) the numbers 0, X, 2X, $\overline{X}$ or 0, when the obtained binary weighting from the relationship $2Y_{n+1} + Y_n + C_{t-1}$ assumes the values 0, 1, 2, 3 and 4 respectively.

5. The multiplier as claimed in claim 4, characterized in that the submultipliers comprise decoders of a second type (figure 9C and figure 14) encoded in such a manner that the first operand input of the adder (97) receives from the switching means (98) the numbers $2\overline{X}$, $\overline{X}$, 0, X and 2X when the obtained binary weight from the relationship $-2Y_{n+1} + Y_n + C_{t-1}$ assumes the values -2, -1, 0, 1 and 2 respectively.

6.  The multiplier as claimed in claim 5, characterized in that the submultipliers comprise a decoder of a third type (figure 13) with three inputs encoded in such a manner that the first operand input of the adder (97) receives from the switching means (98) the numbers 0, X, X, 0, 0, X, X, 0 when the binary weighting of the number C8, $Y_n$, $C_n$ respectively assumes the values 0 through 7, the bit C8 being representative of the mode of the real or complex multiplication, which is performed by the multiplier.

7.  The multiplier as claimed in claim 6, characterized in that the submultipliers of the first series are composed of two submultipliers (109 and 11) having decoders of the first type, of a submultiplier (115bis) having a decoder of the third type and the submultipliers of the second series being composed of three submultipliers (113, 114 and 15) having decoders of the first type and of a submultiplier (115ter) having a decoder of the second type.

8.  A signal treating processor, characterized in that it comprises a multiplier in accordance with one of the claims 1 through 7.

## Ansprüche

1.  Multiplikatorwerk für die Mulitplikation zweier komplexer Zahlen $X = X' + JX''$ und $Y = Y' + JY''$, wobei X', X'', Y', Y'' jeweils N/2 Bits (N geradzahlige ganze Zahl) besitzt, eines Typs mit einer ersten Folge (37, 64...71; 109, 110, 115a; 200, 115, 115a) und einer zweiten Folge (38; 72, 79; 113, 112, 115c) von K Untermulitplikatorwerken, die kaskadenartig verbunden sind, wobei jede Folge einen ersten und einen zweiten Operandeneingang ($E_1$ und $E_2$), einen dritten Eingang (S) und einen Ausgang (R) enthält, wobei die Zahlen X1 und X2 mit N/2 Bits an die ersten Operandeneingänge der ersten bzw. der zweiten Folge und die Zahlen Y1 und Y2 mit N/2 Bits an die zweiten Operandeneingänge der ersten bzw. der zweiten Folge eingegeben werden und jede Folge so angeordnet ist, daß sie an ihren Ausgang (R) das Produkt der Binärzahlen, die in ihren ersten und in ihren zweiten Operandeneingang eingegeben werden, erhöht um eine Binärgröße, die gleich der in ihren dritten Eingang eingegebenen Binärzahl ist, liefert, wobei das an den Ausgang (R) der ersten Folge gelieferte Ergebnis in den dritten Eingang (S) der zweiten Folge (S) eingegeben wird, dadurch gekennzeichnet, daß das Multiplikatorwerk Verteilermittel (118...129, 129a) zum Ausführen der Berechnung des Realteils und des Imaginärteils des Produktes zweier komplexer Zahlen X und Y während eines ersten Zyklus ($T_0$) bzw. während eines zweiten Zyklus ($T_1$) umfaßt, wobei die Zahlen X1, X2, Y1, Y2 während des ersten Zyklus ($T_0$) die Werte $X'.2^{N/2}$, $\pm X''$, Y', $Y''.2^{N/2}$ besitzen und wobei die Zahlen X1, X2, Y1, Y2 während des zweiten Zyklus ($T_1$) die Werte $X''.2^{N/2}$, $\pm X'$, Y', $Y''.2^{N/2}$ besitzen.

2.  Multiplikatorwerk gemäß Anspruch 1, dadurch gekennzeichnet, daß die Verteilermittel außerdem Steuermittel (121, 127, 129) enthalten, um die Aneinanderreihung der Zahlen X1 und X2 im selben Wort so auszuführen, daß $X1 = X2 = (X' + 2^{N/2}.X'')$ ist, und um die Zahl X gleichzeitig an die ersten Operandeneingänge der ersten (37) und der zweiten Folge (38) einzugeben, um die Multiplikation der zwei Zahlen X und Y zu gestatten, wenn diese Zahlen reell sind.

3.  Multiplikatorwerk gemäß einem der Ansprüche 1 und 2, dadurch gekennzeichnet, daß jedes Untermultiplikatorwerk einer Folge ein Addierwerk (97) und ein Verteilerwerk (98) enthält, die von einem Dekodierer (99) für den Zustand der benachbarten Doppelbits $Y_n'$ $Y_{n+1}$ der in die zweiten Operandeneingänge der ersten und der zweiten Folge eingegebenen Zahlen Y1 oder Y2 gesteuert werden, um an einen ersten Operandeneingang des Addierwerks (97) die während des Durchgangs durch das Verteilwerk (98) bearbeitete Zahl X einzugeben, wobei die Zahl X die Werte 0, X, 2X, $\overline{X}$ oder 2X annehmen kann.

4.  Multiplikatorwerk gemäß Anspruch 3, dadurch gekennzeichnet, daß die Untermultiplikatorwerke Dekodierer eines ersten Typs (Fig. 8, Fig. 7B) enthalten, wobei jeder Dekodierer Eingänge besitzt, in die die aus dem in der Folge diesem vorangehenden Untermultiplikatorverk hervorgehenden Doppelbits $Y_n$ und

$Y_{n+1}$ und ein Übertragsbit $C_{t-1}$ eingegeben werden, und so kodiert ist, daß der erste Operandeneingang des Addierwerks (97) vom Verteilerwerk (98) die Zahlen 0, X, 2X, $\overline{X}$ und 0 empfängt, wenn die aus der Beziehung $2Y_{n+1} + Y_n + C_{t-1}$ erhaltene Binärgewichtung die Werte 0, 1, 2, 3 und 4 annimmt.

5. Multiplikatorverk gemäß Anspruch 4, dadurch gekennzeichnet, daß die Untermultiplikatorwerke Dekodierer eines zweiten Typs (Fig. 9C, Fig. 14) enthalten, der so kodiert ist, daß der erste Operandeneingang des Addierwerks (97) vom Verteilerwerk (98) die Zahlen $2\overline{X}$, $\overline{X}$, 0, X und 2X empfängt, wenn die aus der Beziehung $-2Y_{n+1} + Y_n + C_{t-1}$ erhaltene Binärgewichtung die Werte -2, -1, 0, 1 und 2 annimmt.

6. Multiplikatorwerk gemäß Anspruch 5, dadurch gekennzeichnet, daß die Untermultiplikatorwerke einen Dekodierer eines dritten Typs (Fig. 13) mit drei Eingängen enthalten, der so kodiert ist, daß der erste Operandeneingang des Addierverks (97) vom Verteilerwerk (98) die Zahlen 0, X, X, 0, 0, X, X, 0 empfängt, wenn die Binärgewichtung der Zahl C8, $Y_n$, $C_n$ jeweils die Werte 0 bis 7 annimmt, wobei das Bit C8 den Modus der komplexen oder reellen Multiplikation, die vom Multiplikatorwerk ausgeführt wird, darstellt.

7. Multiplikatorwerk gemäß Anspruch 6, dadurch gekennzeichnet, daß die Untermultiplikatorwerke der ersten Folge aus zwei Untermultiplikatorwerken (109, 111) mit Dekodierern des ersten Typs und aus einem Untermultiplikatorwerk (115a) mit einem Dekodierer des dritten Typs und die Untermultiplikatorwerke der zweiten Folge aus drei Untermultiplikatorwerken (113, 114 und 115) mit Dekodierern des ersten Typs und aus einem Untermultiplikatorwerk (115c) mit einem Dekodierer des zweiten Typs gebildet werden.

8. Signalbearbeitungsprozessor, dadurch gekennzeichnet, daß er ein Multiplikatorwerk gemäß einem der Ansprüche 1 bis 7 umfaßt.

Fig.1

Fig.2A

Fig.3

# Fig.2B

EP 0 209 446 B1

| | | | | | | | | | |
|---|---|---|---|---|---|---|---|---|---|
| H | ⊓_⊔⊓_⊔⊓_⊔⊓_⊔⊓_⊔⊓_⊔⊓_⊔⊓_⊔⊓_ | | | | | | | | |
| $E_{11}$ | $Y$ | $Y'$ | $Y$ | $Y'$ | | | | | |
| $E_{21}$ | $X_0$ | $X'_0$ | $X'_0$ | $X_0$ | | | | | |
| $P_1$ | | $YX_0$ | $Y'X'_0$ | $YX'_0$ | $Y'X_0$ | | | | |
| $E_{12}$ | | $Y$ | $Y'$ | $Y$ | $Y'$ | | | | |
| $E_{22}$ | | $2^4X_1$ | $2^4X'_1$ | $2^4X'_1$ | $2^4X_1$ | | | | |
| $P_2$ | | | $YX_0+2^4YX_1$ | $Y'X'_0+2^4Y'X'_1$ | | $..+2^4Y'X_1$ | | | |
| $E_{13}$ | | | $Y$ | $Y'$ | $Y$ | $Y'$ | | | |
| $E_{23}$ | | | $2^8X_2$ | $2^8X'_2$ | $2^8X'_2$ | $2^8X_2$ | | | |
| $P_3$ | | | | $..+2^8YX_2$ | $..+2^8Y'X'_2$ | $..+2^8YX'_2$ | $..+2^8Y'X_2$ | | |
| $E_{14}$ | | | | $Y$ | $Y'$ | $Y$ | $Y'$ | | |
| $E_{24}$ | | | | $2^{12}X_3$ | $2^{12}X'_3$ | $2^{12}X'_3$ | $2^{12}X_3$ | | |
| $P_4$ | | | | | $XY$ | $X'Y'$ | $X'Y$ | $XY'$ | |

Fig.4

Fig.5

Fig.6

Fig.7.A

Fig.8

Fig.9.A

# FIG_7B

| $2y_{n+1}+y_n+C_{(t-1)}$ | A | B | $C_{(t)}$ |
|:---:|:---:|:---:|:---:|
| 0 | O | O | O |
| 1 | X | O | O |
| 2 | 2X | O | O |
| 3 | $\overline{X}$ | 1 | 1 |
| 4 | O | O | 1 |

# FIG_9B

| $-y_n+C_{(t-1)}$ | A | B |
|:---:|:---:|:---:|
| -1 | $\overline{X}$ | 1 |
| 0 | O | O |
| 1 | X | O |

FIG_9C

**FIG_10**

**FIG_11**

Fig.12

# FIG_13

| C8 | y7 | $C_{(t-1)}$ | A | $B_{(t)}$ | $C_{(t)}$ |
|----|----|----|----|----|----|
| 0 | 0 | 0 | O | 0 | 0 |
| 0 | 0 | 1 | X | 0 | 0 |
| 0 | 0 | 0 | X | 0 | 0 |
| 0 | 1 | 1 | O | 0 | 1 |
| 1 | 0 | 0 | O | 0 | 0 |
| 1 | 0 | 1 | X | 0 | 0 |
| 1 | 1 | 0 | $\overline{X}$ | 1 | 0 |
| 1 | 1 | 1 | O | 0 | 0 |

# FIG_14

| $-2y_{(n+1)} + y_n + C_{(t-1)}$ | A | $B_{(t)}$ |
|----|----|----|
| -2 | $\overline{2x}$ | 1 |
| -1 | $\overline{x}$ | 1 |
| 0 | O | 0 |
| 1 | X | 0 |
| 2 | 2x | 0 |